## Europäisches Patentamt

(19) **European Patent Office**

**Office européen des brevets**

(11) Veröffentlichungsnummer: **0 063 803**
**B1**

(12) **EUROPÄISCHE PATENTSCHRIFT**

(45) Veröffentlichungstag der Patentschrift:
18.03.87

(51) Int. Cl.⁴: **G 01 S 7/36,** G 01 S 7/30

(21) Anmeldenummer: **82103461.8**

(22) Anmeldetag: **23.04.82**

(54) **Puls-Doppler-Radarempfänger mit einer Schaltung zur Wiederherstellung des ungestörten Signalverlaufs.**

(30) Priorität: **27.04.81  DE 3116612**

(43) Veröffentlichungstag der Anmeldung:
**03.11.82 Patentblatt 82/44**

(45) Bekanntmachung des Hinweises auf die Patenterteilung:
**18.03.87 Patentblatt 87/12**

(84) Benannte Vertragsstaaten:
**FR GB IT NL**

(56) Entgegenhaltungen:
**DE-A-2 807 205**
**DE-B-1 178 911**
**DE-B-1 239 744**
**DE-B-1 247 420**
**DE-B-2 155 074**
**DE-B-2 500 087**
**US-A-3 987 440**

(73) Patentinhaber: **Siemens Aktiengesellschaft Berlin und München, Wittelsbacherplatz 2, D-8000 München 2 (DE)**

(72) Erfinder: **Hauptmann, Rudolf, Dipl.- Ing., Augustenfelderstrasse 23, D-8060 Dachau (DE)**

**Beschreibung**

Die Erfindung bezieht sich auf einen Puls-Doppler-Radarempfänger mit einer Schaltung zur Wiederherstellung des ungestörten Signalverlaufs von Radar-Zielechosignalen durch laufende Überwachung der nacheinander erhaltenen Amplitudenwerte.

Es ist bereits bekannt, kurzzeitige Störungen von Impuls-Radar-Empfängern durch Vergleich aufeinander folgender Zielamplitudenwerte zu unterdrücken. Aus der deutschen Auslegeschrift 1 247 420 ist eine Anordnung zur Bestimmung des Maximums eines von einem Impulsradargerät gelieferten Videoimpulses bekannt, bei der eine Amplitudenquantisierung des Videoimpulses in aufeinander folgenden Zeitintervallen gleicher Dauer vorgenommen wird. Durch einen paarweisen Vergleich aufeinander folgender Amplitudenwerte ergibt sich ein das Impulsmaximum kennzeichnendes Signal, wenn sich das Vorzeichen der beim Vergleich festgestellten Differenz ändert.

Zur Unterdrückung von Störungen ist es aus der deutschen Auslegeschrift 1 239 744 bekannt, zwei Radarantennen vorzugehen und zur Störbefreiung mittels einer Vergleichsschaltung Informationen nur dann weiter zu verarbeiten, wenn die Ausgangssignale der den beiden Antennen zugeordneten Empfängern innerhalb vorgegebener Toleranzen von gleicher Form sind. Diese Anordnung hat den Nachteil, daß ein sehr großer Aufwand sowohl bezüglich der Antennen als auch bezüglich der Empfänger notwendig ist, weil zwei praktisch selbständige Radaranlagen benötigt werden.

Aus der deutschen Auslegeschrift 1 178 911 ist eine Anordnung zur Verminderung von nichtperiodischen Störungen bei Radarsignalen bekannt, bei der von einem Eingangssignalverlauf aus periodischen Einzelsignalen durch Differenzbildung dem gleichen Signalverlauf jedoch umgekehrten Vorzeichen und einer Zeitverzögerung neue Signale erzeugen werden. Die so erhaltenen neuen Signale werden einer Gleichrichteranordnung zugeführt, die nur Signale durchläßt, deren Polarität in einer bestimmten Beziehung zu den Eingangssignalen steht. Durch die Gegeneinanderschaltung, welche zur Beseitigung von Störungen mehrmals erfolgen muß, tritt auch eine relativ starke Beeintrichtigung der Nutzsignale ein, so daß beim Auftreten von Störsignalen die Information über die Nutzsignale stark verringert wird. Eine Vorzeichenänderung allein als Information über das Auftreten eines nichtsynchronen Einzelstörimpulses ist kein ausreichendes Kriterium, um die bei den verschiedensten Betriebsweisen auftretenden Möglichkeiten zu erfassen und Störungen zu eliminieren. Insbesondere treten bei Überstreichungen der Antennenkeule eines Radargerätes durch ein sich quer zu Hauptstrahlrichtung bewegendes Objekt zunächst ansteigende und dann wieder abfallende Amplituden der Echosignale auf. Dabei ergibt sich im Maximum, d.h. wenn das Ziel die Hauptstrahlungsrichtung überschritten hat, eine Vorzeichenänderung, welche nach der bekannten Anordnung als Störungskriterium genutzt würde. Ähnliche Probleme ergeben sich, wenn das erfaßte Objekt sich zwar in radialer Richtung auf das Radargerät zu bewegt, jedoch die Antenne eine Schwenk- oder Drehbewegung durchführt, was z. B. bei Rundsichtradargeräten der Fall ist.

Aus der Patentschrift US-A-3 987 440 ist ein Radarempfanger bekannt, der zur Wiederherstellung des ungestörten Amplituden-Verlaufs eine laufende Überwachung der nacheinander erhaltenen Amplitudenwerte vorsieht. Hierzu wird von einem einer Störung vorangehenden Amplitudenwert ein Vorhersagewert abgeleitet, der durch Extrapolation ermittelt wird. Nach einem Vergleich des Vorhersagewertes mit dem jeweils folgenden Amplitudenwert werden im Falle gestörter Amplitudenwerte diese durch den Vorhersagewert substituiert. Dieses Verfahren setzt einen symmetrischen Funktionsverlauf voraus.

Der Erfindung liegt die Aufgabe zugrunde, einen Radarempfänger der eingangs genannten Art anzugeben, der in der Lage ist, den durch Ausfall einzelner Signalamplituden oder durch Einzelimpulsstörer gestörten Signalverlauf in seiner nahezu ursprünglichen Form wiederherzustellen, ohne daß dabei die Entdeckungswahrscheinlichkeit für die im allgemeinen schwachen Bewegtzielechosignale unzulässig beeinträchtigt wird. Der schaltungsmäßige Aufwand soll dabei in angemessenen Grenzen bleiben. Gemäß der Erfindung wird dies dadurch erreicht, daß

- jeder Amplitudenwert mit jedem der beiden unmittelbar benachbarten Amplitudenwerte oder mit einem aus wenigstens diesen beiden Amplitudenwerten gebildeten Interpolationswert verglichen wird;

- jeder Amplitudenwert, der um mindestens einen vorgegebenen Betrag von einem der unmittelbar benachbarten Amplitudenwerten, bzw. von dem jeweiligen Interpolationswert abweicht, als gestörter Amplitudenwert verstanden wird; und

- jeder als gestört ermittelte Amplitudenwert von einem der beiden unmittelbar benachbarten Amplitudenwerte bzw. dem jeweiligen Interpolationswert begrenzt oder durch diesen ersetzt wird.

Die Erfindung und Weiterbildungen der Erfindung werden anhand von Zeichnungen näher erläutert. Es zeigen

Fig. 1 ein Amplituden-Zeitdiagramm vom Empfangssignalen,
Fig. 2 ein Amplituden-Zeitdiagramm der den Empfangssignalen zugeordneten Begrenzerwerte,
Fig. 3 ein der Figur 1 entsprechendes Amplituden-Zeitdiagramm nach der Korrektur,
Fig. 4 ein vereinfachtes Blockschaltbild eines Radargerätes nach der Erfindung,
Fig. 5 Einzelheiten einer Interpolationsschaltung zur Wiederherstellung des ungestörten Signalverlaufs,
Fig. 6, 7 weitere Ausführungsbeispiele für eine Interpolationsschaltung,
Fig. 8 Zeigerdigramm zur Schaltung Fig. 7,
Fig. 9 Ausführungsbeispiel mit Doppelschwelle

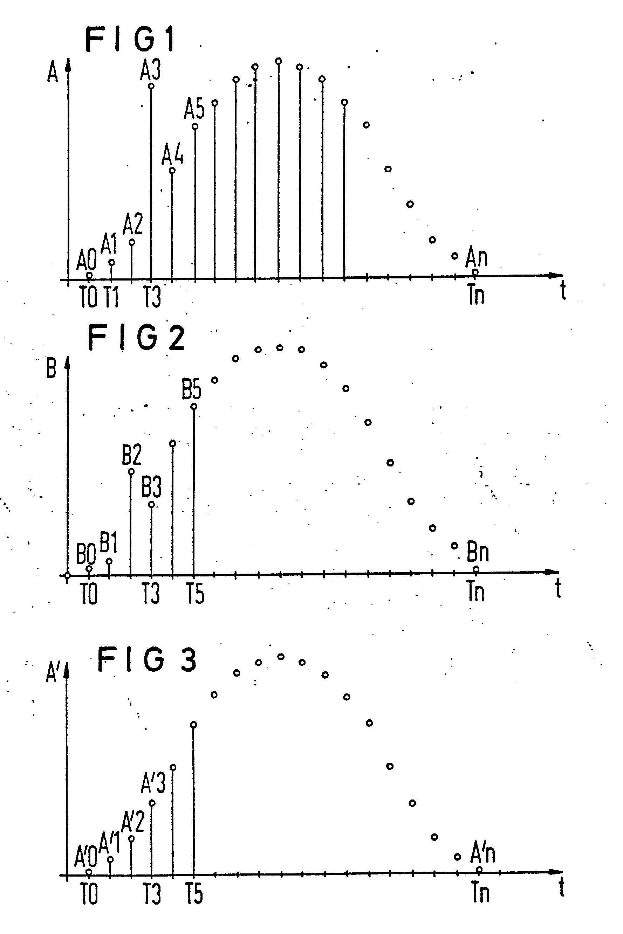

In Fig. 1 ist die Amplitude A als Funktion der Zeit für eine Folge diskreter Amplitudenwette A0, A1... An, die einzelnen Abtastproben aus dem Echosignal eines Zieles nach der Gleichrichtung zu den Zeitpunkten T0, T1... Tn entsprechen, dargestellt. Dabei erfolgt die Entnahme der Abtastproben bei einem Pulsradargerät zweckmäßig jeweils für einen Entfernungsbereich im Takt der Radarpulsfolgefrequenz. Abgesehen von dem auf einen asynchronen Störungsimpuls zurückzuführenden ungewöhnlich stärken Amplitudenwert A3, hat die Hüllkurve der dargestellten Amplitudenwerte in Abhängigkeit der Zeit eine etwa glockenförmige Verteilung. Derartige Hüllkurven können bei einem Radargerät dadurch auftreten, daß entweder die Richtcharakteristik der Antenne über ein festes oder in radialer Richtung sich bewegendes Ziel hinweggeschwenkt wird oder daß ein tangential sich bewegendes Ziel die feststehende Richtcharakteristik durchquert. Aus der Charakteristik der Antenne und aus der Größe der von der Antenne zu erfassenden Ziele läßt sich für jeden Radarempfänger eine derartige Hüllkurve ermitteln. Daraus kann die Amplitude eines zum Zeitpunkt T3, entweder durch einen Störimpuls gestörten oder aus einem anderen Grunde ausgefallenen Signals rekonstruiert werden.

Die Fig. 2 zeigt die Begrenzerwerte Bo... Bn zu den jeweiligen Abtastzeitpunkten der Empfangssignale, die für den Fall einer Einzelimpulsstörung durch Interpolation von gemessenen Stützwerten gewonnen werden und die in diesem Fall gleichzeitig den Schwellenwert einer Schaltung zur Begrenzung der Störimpulse darstellen.

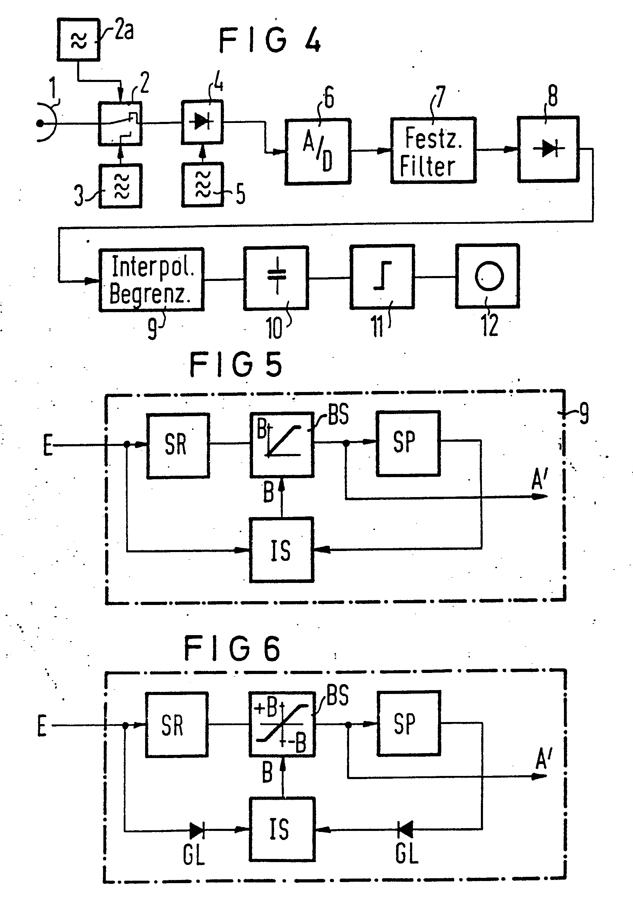

Das vereinfachte Blockschaltbild eines Impulsradargerätes mit einer Interpolationsschaltung nach Fig. 4 zeigt eine Antenne 1, der ein Sende-Empfangsschalter 2 und ein Sender 3 nachgeschaltet sind. Die Umschaltung des Sende-Empfangsschalters 2 erfolgt durch einen Taktgeber 2a. Im Empfangsteil ist ein Mischer 4 vorgesehen, dessen Überlagerungsoszillator mit 5 bezeichnet ist. Die Echosignale der einzelnen Ziele werden durch geeignete Schaltungen getrennt verarbeitet, wobei z.B. Entfernungskanäle benutzt werden können. Ein einzelner derartiger, einer bestimmten Entfernung zugeordneter Zweig ist in Fig. 4 dargestellt. Die Echosignale nur eines in einer bestimmten Entfernung liegenden Zieles gelangen in einen bestimmten Entfernungskanal, ohne daß eine Vermischung mit Echosignalen anderer Ziele eintreten kann. Echosignale nichtsynchroner Impulsstörer fallen damit nach statistischer Verteilung jeweils nur mit einem Impuls in die verschiedensten Entfernungsbereiche. Auf die Mischstufe 4 folgt bei digitaler Weiterverarbeitung im nachfolgenden Signalverarbeitungsbereich ein Analog-Digital-Wandler 6, an den sich ein digital arbeitendes Festzeichenfilter 7 und eine Gleichrichteranordnung 8 bzw. Betragsaddierer anschließen. Das gleichgerichtete Signal wird einer Interpolationsschaltung 9 zugeführt, welcher eine Speicher- und Tiefpaßschaltung 10 nachgeschaltet ist. Signale, welche eine Schwelle 11 überschreiten, werden einem Auswertegerät, z.B. einem Sichtgerät 12 zugeführt.

In Fig. 3 ist eine einfache Interpolationsschaltung dargestellt in Verbindung mit einer Schaltungsanordnung nach Art einer mitlaufenden Schwelle (Begrenzerschaltung), mit der störende nichtsynchrone Impulse, die z.B. durch Zündanlagen von Kraftfahrzeugen oder durch fremde Radaranlagen erzeugt werden, unterdrückt werden, ohne den Signalverlauf am Ausgang der Nachintegration 10 (Fig. 4) nennenswert zu beeinflussen. Durch die Kenntnis vom Signalverlauf an einer bestimmten Stelle des Radarempfängers kann aus gemessenen Stützwerten auf den Signalverlauf in deren Umgebung geschlossen werden. Um Störsignale zu eliminieren, wird ihre Umgebung vermessen und daraus der zeitliche Verlauf eines ungestörten Signals interpoliert. Im Prinzip können alle bekannten Interpolationsverfahren angewendet werden. Auch eine Maximal- bzw. Minimalwertbildung ist möglich. Je nach Art des verwendeten Interpolationsverfahrens ist eine unterschiedliche Anzahl von Stützwerten erforderlich. Da Zielsignale im allgemeinen einer symmetrischen Antennenfunktion (Fig. 1) unterliegen, ist es vorteilhaft, die Stützwerte vor und nach einem Störsignal zu vermessen.

Der in Fig. 5 dargestellten Interpolations- und Begrenzungsanordnung liegt eine lineare Interpolation zwischen zwei Signalamplituden (Stützwerten) zugrunde, wobei das Störsignal nur in einer Empfangsperiode (N = 1) auftreten soll. Die Stützwerte werden jeweils eine Empfangsperiode vor und eine nach der momentan zu überprüfenden Empfangsperiode gewonnen. Das Signal der beobachteten Empfangsperiode wird in dieser Schaltung auf den interpolierten Wert begrenzt und dient in der nächsten Empfangsperiode als Stützwert. Werden z.B. nacheinander die Empfangssignale A2, A3 zu den Zeitpunkten T2 und T3 beobachtet, dann wird der erste Interpolationswert aus den Amplitudenwerten A1 und A3 durch Mittelwertbildung gewonnen. Da zum Zeitpunkt T3 ein großer Störimpuls anliegt, hat auch der Begrenzerwert B2 (Fig. 2) einen aus dem normalen Verlauf herausragenden hohen Wert. Da der Begrenzerwert B2 größer ist als der Amplitudenwert A2, wird in den Signalverlauf nicht eingegriffen. Der nächste Interpolationswert zur Überprüfung der Signalamplitude im Zeitpunkt T3 wird aus den Amplitudenwerten A2 und A4 gebildet. Der daraus gewonnene Begrenzerwert B3 begrenzt das zum Zeitpunkt T3 anliegende Große Störsignal auf einen normalen Signalamplitudenwert A'3 = B3 (Fig. 3). In der nächsten Empfangsperiode wird das korrigierte Signal A'3 als Stützwert zusammen mit der Signalamplitude A5 für die nächste Interpolation benutzt.

Am Eingang E der Interpolations- und Begrenzungsschaltung 9 auftretende Signale werden im Takt der Radarwiederholfrequenz durch ein Schieberegister SR eingegeben und hindurchgeschoben. Die Anzahl N der Speicherplätze im Schieberegister SR ist abhängig von der Anzahl der möglichen Störimpulse, die nacheinander am Eingang E auftreten können. Die Signalamplituden am Ausgang des Schieberegisters SR werden in einem Begrenzer BS ihrem Betrage nach begrenzt. Der Begrenzerwert B des Begrenzers BS stellt eine mitlaufende Schwelle oder Begrenzungspegel dar, die von einer Interpolationsstufe IS ständig neu dem Begrenzer BS zugeführt wird. Der Interpolationsstufe IS, die hier als Mittelwert bildende Stufe ausgebildet ist, werden die Signale vom Eingang E der Schaltung und eines Speichers SP, der sich an die Begrenzerstufe BS anschließt, zugeführt. Ist das Ausgangssignal des Schieberegisters SR um einen vorgegebenen Wert größer als der interpolierte Wert, wird es in dieser Ausführung durch den interpolierten Weit ersetzt bzw. begrenzt.

3

Das begrenzte Signal A' bildet einerseits den Ausgang der Schaltung und wird andererseits im Takt der Radarwiederholfrequenz in den Speicher SP eingelesen und dort um eine Radarempfangsperiode verzögert. Die beschriebene Schaltung ist umso wirkungsvoller, je kleiner die Anzahl von hintereinander auftretenden Störimpulsen und damit auch die Anzahl N der Speicherplätze des Schieberegisters SR ist. Die Schaltung eignet sich daher besonders für den Einsatz unmittelbar hinter dem Analog-Digitalwandler 6 (N = 1), hinter einem Einfach-Canceller (N = 2) oder hinter einen Doppel-Canceller (N = 3).

Wird die Schaltung vor der Gleichrichterschaltung 8 eingesetzt, so muß ein zweiseitiger Begrenzer mit den Schwellen +B und -B verwendet werden. Außerdem ist beiden Eingängen der Interpolationsschaltung IS ein Gleichrichter GL vorzuschalten (Fig. 6).

Die Interpolationsstufe kann in jedem Fall auch so ausgebildet sein, daß sich der Begrenzerwert B aus der größeren Amplitude des Signales E oder des Ausgangssignales des Speichers SP ergibt (Maximalwertbildung).

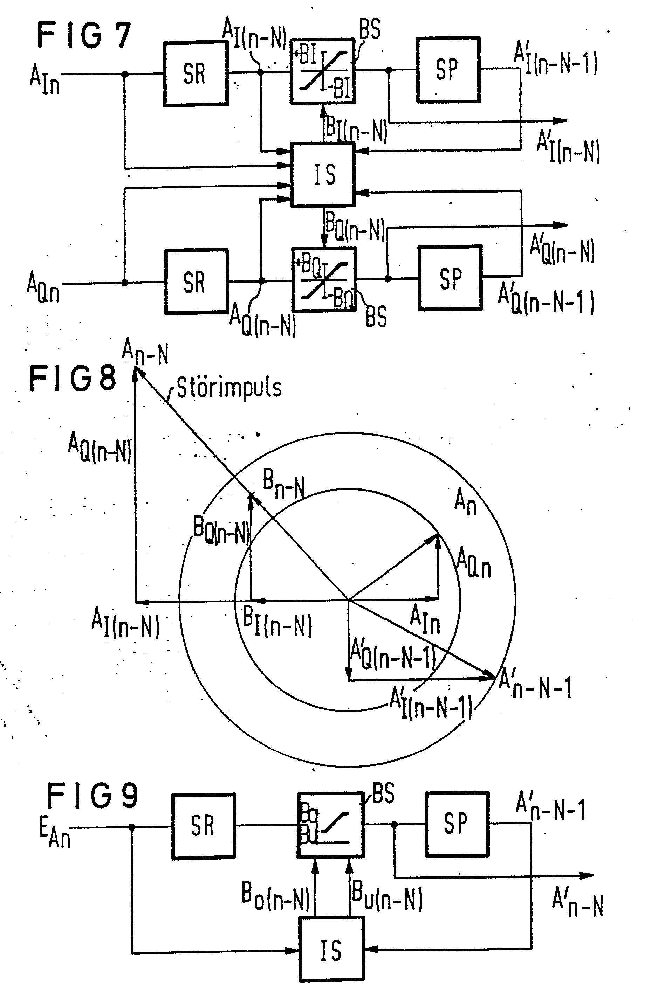

Wird die Schaltung in einem komplex arbeitenden System mit I- und Q-Kanal angewendet, so kann es sinnvoll sein, auch einen komplexen Begrenzerwert $B_I$ und $B_Q$ zu errechnen (Fig. 7 und 8).

Werden die Eingangssignale $A_0$ bis $A_n$ aufgeteilt in Real- und Imaginäranteil $A_n = A_{In} + jA_{Qn}$, so können die Begrenzerwerte beispielsweise folgendermaßen errechnet werden (jeder andere Algorithmus ist denkbar):

$$B_{I(n-N)} = \frac{1}{2} \cdot \left( \sqrt{A'^2_{I(n-N-1)} + A'^2_{Q(n-N-1)}} + \sqrt{A^2_{In} + A^2_{Qn}} \right) \cdot$$

$$A_{I(n-N)} \Big/ \sqrt{A^2_{I(n-N)} + A^2_{Q(n-N)}}$$

$$B_{Q(n-N)} = \frac{1}{2} \left( \sqrt{A'^2_{I(n-N-1)} + A'^2_{Q(n-N-1)}} + \sqrt{A^2_{In} + A^2_{Qn}} \right) \cdot$$

$$A_{Q(n-N)} \Big/ \sqrt{A^2_{I(n-N} + A^2_{Q(n-N)}}$$

In den bisher behandelten Ausführungsbeispielen wurden vornehmlich größere Störimpulse erkannt und durch Interpolation ersetzt.

Genau so gut ist es möglich, zu kleine Signale, die um einen vorgegebenen Wert kleiner als die benachbarten Stützwerte sind, zu ersetzen. Dadurch lassen sich Lücken im Signalverlauf korrigieren.

Ein Beispiel f+r eine Interpolationsschaltung, die sowohl zu große als auch zu kleine Signale erkennt, beschreibt Fig. 9. Zur Vereinfachung ist eine Schaltung angegeben, die hinter einem Gleichrichter bzw. Betragsaddierer eingesetzt werden kann (vgl. Fig. 6).

Die am Eingang E der Schaltung auftretenden Amplitudenwerte $A_n$ werden durch das Schieberegister SR um N Zeitintervalle T verzögert. N entspricht der Anzahl der hintereinander auftretenden Störimpulse am Eingang E. Das so verzögerte Signal $A_{n-N}$ gelangt zur Begrenzerschaltung BS. Ist das Signal $A_{n-N}$ größer als die obere Begrenzerschwelle $B_{o(n-N)}$ oder kleiner als die untere Begrenzerschwelle $B_{u(n-N)}$ wird es durch den Interpolationswert $\frac{1}{2}(A_n + A'_{n-N-1})$ ersetzt, wenn nicht, gelangt es unbegrenzt zum Ausgang bzw. zum Speicher SP als Signal $A'_{n-N}$. Das Ausgangssignal des Speichers SP ($A'_{n-N-1}$) und das Eingangssignal ($A_n$) werden der Interpolationsstufe IS zugeführt. In der Interpolationsstufe IS wird einmal der Interpolationswert (z.B. $\frac{1}{2}(A_n + A'_{n-N-1})$) gebildet, zum anderen der obere Begrenzerwert ($B_{o(n-N)} = x \cdot \frac{1}{2}(A_n + A'_{n-N-1})$ und der untere Begrenzerwert ($B_{u(n-N)} = y \cdot \frac{1}{2}(A_n + A'_{n-N-1})$ errechnet. Die Faktoren x und y geben die Toleranzen für die Ansprechgrenzen an, z.B. x = 1,5 und y = 0,5.

Im obigen Beispiel wurde jeder zu untersuchende Wert $A_{n-N}$ ersetzt durch den Mittelwert seiner benachbarten Stützwerte $A_n$ und $A'_{n-N-1}$, wenn er um den Faktor 1,5 größer oder um den Faktor 0,5 kleiner als dieser Mittelwert ist. Der so untersuchte und evtl. korrigierte Wert $A'_{n-N}$ dient dann in der nächsten Empfangsperiode (nach einem Zeitintervall T) wiederum der Mittelwertbildung aus den Werten $A_{n+1}$ und $A'_{n-N}$ zur Untersuchung des Wertes $A_{n-N+1}$.

**Patentansprüche**

1. Puls-Doppler-Radarempfänger mit einer Schaltung zur Wiederherstellung des ungestörten Signalverlaufs von Radar-Zielechosignalen durch laufende Überwachung der nacheinander erhaltenen Amplitudenwerte ($A_0$ - $A_n$), dadurch gekennzeichnet,
- daß jeder Amplitudenwert ($A_3$) mit jedem der beiden unmittelbar benachbarten Amplitudenwerte ($A_2$, $A_4$; Fig. 1) oder mit einem aus wenigstens diesen beiden Amplitudenwerten ($A_2$, $A_4$) gebildeten Interpolationswert ($B_3$) verglichen wird;
- daß jeder Amplitudenwert ($A_3$), der um mindestens einen vorgegebenen Betrag von einem der unmittelbar benachbarten Amplitudenwerten ($A_2$, $A_4$), bzw. von dem jeweiligen Interpolationswert ($B_3$) abweicht, als gestörter Amplitudenwert verstanden wird; und
- daß jeder als gestört ermittelte Amplitudenwert ($A_3$) auf einen der beiden unmittelbar benachbarten Amplitudenwerte ($A_2$, $A_4$) bzw. auf den jeweiligen Interpolationswert ($B_3$) begrenzt oder durch diesen ersetzt wird.

2. Puls-Doppler-Radarempfänger nach Anspruch 1, dadurch gekennzeichnet, daß die als gestört ermittelten Amplitudenwerte durch eine Begrenzerschaltung (BS) mit einem mitlaufenden Begrenzungspegel, der von dem jeweiligen Interpolationswert bzw. vom größten oder kleinsten der beiden ummittelbar benachbarten Amplitudenwerte gesteuert ist, auf einen dem übrigen Signalverlauf angepaßten Amplitudenwert begrenzt werden.

3. Puls-Doppler-Radarempfänger nach Anspruch 1 oder 2, dadurch gekennzeichnet, daß verlorengegangene oder ausgetastete Amplitudenwerte durch eine Substitutionsschaltung (9) ersetzt werden, wobei der Ersatzwert aus dem größten oder kleinsten der beiden unmittelbar benachbarten Amplitudenwerte bzw. aus dem Interpolationswert besteht.

4. Puls-Doppler-Radarempfänger nach einem der vorhergehenden Ansprüche, dadurch gekennzeichnet, daß unter der Voraussetzung einer symmetrischen Antennenfunktion die Interpolation durch Mittelwertbildung aus zwei Stützwerten erfolgt, die dem Signalverlauf vor und nach dem zu überprüfenden Amplitudenwert entnommen wird.

5. Puls-Doppler-Radarempfänger, dadurch gekennzeichnet, daß der durch Vergleich der dem(n) gestörten Amplitudenwert(en) benachbarten Amplitudenwerte ermittelte größte Amplitudenwert für die Wiederherstellung des ungestörten Signalverlaufs herangezogen ist.

6. Puls-Doppler-Radarempfänger nach einem der Ansprüche 1 bis 3, dadurch gekennzeichnet, daß der durch Vergleich der dem(n) gestörten Amplitudenwert(en) benachbarten Amplitudenwerte ermittelte kleinste Amplitudenwert für die Wiederherstellung des ungestörten Signalverlaufs herangezogen ist.

7. Puls-Doppler-Radarempfänger nach einem der Ansprüche 3 bis 6, dadurch gekennzeichnet, daß die Interpolations- und Begrenzer- bzw. Substitutionsschaltung (9) aus einem Schieberegister (SR) und einer Begrenzeranordnung (BS) besteht, deren Begrenzungspegel durch eine Interpolationsschaltung (IS) aus den vom Eingang des Schieberegisters (SR) und den vom Ausgang der Begrenzeranordnung (BS) über einen Speicher (SP) zugeführten Signalwerten durch Interpolation gewonnen werden.

8. Puls-Doppler-Radarempfänger nach einem der vorhergehenden Ansprüche, dadurch gekennzeichnet, daß die Interpolations- und Begrenzer- bzw. Substitutionsschaltung im Signalverarbeitungszweig nach einer Gleichrichteranordnung (8) bzw. Betragsaddition angeordnet ist.

9. Puls-Doppler-Radarempfänger nach einem der Ansprüche 1 bis 7, dadurch gekennzeichnet, daß die Interpolations- und Begrenzer- bzw. Substitutionsschaltung (9) im Signalverarbeitungszweig nach einem Analog-Digital-Wandler (6) angeordnet ist.

10. Puls-Doppler-Radarempfänger nach einem der Ansprüche 1 bis 7, dadurch gekennzeichnet, daß die Interpolations- und Begrenzer- bzw. Substitutionsschaltung nach einem Festzeichenfilter (7) (z.B. Einfach-Canceller, Doppel-Canceller) angeordnet ist.

11. Puls-Doppler-Radarempfänger nach einem der vorhergehenden Ansprüche, dadurch gekennzeichnet, daß die Interpolations- und Begrenzer- bzw. Substitutionsschaltung im I- und Q-Kanal eines Quadratursystems angeordnet ist.

**Claims**

1. A pulse-doppler-radar receiver comprising a circuit which re-establishes the undisturbed signal flow of radar target echo signals by continuously monitoring the consecutively received amplitude values ($A_0$ - $A_n$), characterised in that
- each amplitude value ($A_3$) is compared with each of the two directly adjacent amplitude values ($A_2$, $A_4$; Fig. 1) or with an interpolation value ($B_3$) formed from at least these two amplitude values ($A_2$, $A_4$);
- that each amplitude value ($A_3$) which differs by at least a predetermined amount from one or the directly-adjacent amplitude values ($A_2$, $A_4$) or from the interpolation value ($B_3$) in question is considered to represent a disturbed amplitude value; and
that each amplitude value ($A_3$) which is found to be disturbed is limited at or replaced by one of the two immedietely adjacent amplitude values ($A_2$, $A_4$), or by the relevant interpolation value ($B_3$), as the case may be.

2. A pulse-doppler-radar receiver as claimed in claim 1, characterised in that those amplitude values which are found to be disturbed are limited by a limiter circuit (BS) which has an on-line limitation level - controlled by the relevant interpolation value or by the highest or lowest of the two directly adjacent amplitude values - to an amplitude value adapted to the remainder of the signal flow.

3. A pulse-doppler-radar receiver as claimed in claim 1 or 2, characterised in that lost or blanked amplitude values are replaced by a substitution circuit (9), where the substitute value comprises the highest or lowest of the two directly adjacent amplitude values or of the interpolation value.

4. A pulse-doppler-radar receiver as claimed in one of the preceding claims, characterised in that, assuming a symmetrical antenna function, the interpolation is carried out by forming the mean value of two support values which are obtained from the signal flow before and after the amplitude value which is to be checked.

5. A pulse-doppler-radar receiver characterised in that the highest amplitude value obtained by comparing the amplitude values adjacent to the disturbed amplitude value (S) is used to re-establish the disturbed signal flow.

6. A pulse-doppler-radar receiver as claimed in one of the claims 1 to 3, characterised in that the lowest amplitude value obtained by comparing the amplitude values which are adjacent to the disturbed amplitude value (S) is used to re-establish the disturbed signal flow.

7. A pulse-doppler-radar receiver as claimed in one of the claims 3 to 6, characterised in that the interpolation - limiting - and substitution circuit (9) comprises a shift register (SR) and a limiter arrangement (BS), the limitation level of which is obtained by interpolation by an interpolation circuit (IS) from the signal values supplied from the input of the shift register (SR) and those supplied from the output of the limiter arrangement (BS) via a store (SP).

8. A pulse-doppler-radar receiver as claimed in one of the preceding claims, characterised in that the interpolation - and limiter - and substitution circuit is arranged in the signal processing arm following a rectifier (8) or amount adder.

9. A pulse-doppler-radar receiver as claimed in one of the claims 1 to 7, characterised in that the interpolation and limiter and substitution circuit (9) is arranged in the signal processing arm following an analogue-digital converter (6).

10. A pulse-doppler-radar receiver as claimed in one of the claims 1 to 7, characterised in that the interpolation - and limiter and substitution circuit is arranged following a permanent echo filter (7) (e.g. single canceller, double canceller).

11. A pulse-doppler-radar receiver as claimed in one of the preceding claims, characterised in that the interpolation - and limiter and substitution circuit is arranged in the I- and Q-channel of a quadrature system.

**Revendications**

1. Récepteur radar à effet Doppler à impulsions comportant un circuit de rétablissement de la variation non perturbée de signaux d'échos de cibles du radar, grâce à un contrôle permanent des valeurs d'amplitude ($A_0$ - $A_n$) obtenues successivement, caractérisé en ce que
- chaque valeur d'amplitude ($A_3$) est comparée à chacune des deux valeurs d'amplitude ($A_2$, $A_4$; figure 1) directement voisines, ou à une valeur d'interpolation ($B_3$) formée à partir d'au moins ces deux valeurs d'amplitude ($A_2$ - $A_4$);
- que chaque valeur d'amplitude ($A_3$), qui s'écarte, d'au moins une valeur prédéterminée, de l'une des valeurs d'amplitude ($A_2$, $A_4$) directement voisines ou de la valeur respective d'interpolation ($B_3$), est considérée comme étant une valeur d'amplitude perturbée; et
- que chaque valeur d'amplitude ($A_3$) déterminée comme étant perturbée est limitée à l'une des deux valeurs d'amplitude ($A_2$, $A_4$) directement voisines ou à la valeur respective d'interpolation ($B_3$) ou est remplacée par cette valeur.

2. Récepteur radar à effet Doppler à impulsions suivant la revendication 1, caractérisé par le fait que les valeurs d'amplitude déterminées comme étant perturbées, sont limitées à une valeur d'amplitude adaptée au reste de la variation du signal, par un circuit limiteur (BS) possédant un niveau de limitation associé qui est commandé par la valeur respective d'interpolation ou par celle des deux valeurs d'amplitude directement voisines, qui est maximale ou minimale.

3. Récepteur radar à effet Doppler suivant la revendication 1 ou 2, caractérisé par le fait que des valeurs d'amplitude perdues ou éliminées sont remplacées par un circuit de substitution (9), la valeur de remplacement étant constituée par celle des deux valeurs d'amplitude directement voisines ou de la valeur d'interpolation, qui est maximale ou minimale.

4. Récepteur radar à effet Doppler à impulsions suivant l'une des revendications précédentes, caractérisé par le fait que, dans l'hypothèse d'une fonction d'antenne symétrique, l'interpolation s'effectue par formation de la moyenne à partir de deux valeurs d'appui qui sont prélevées de la variations du signal, en amont et en aval de la valeur d'amplitude devant être contrôlée.

5. Récepteur radar à effet Doppler à impulsions caractérisé par le fait que la valeur d'amplitude maximale, déterminée par comparaison des valeurs d'amplitude voisines de la ou des valeurs d'amplitude perturbées, est utilisée pour le rétablissement de la variation non perturbée du signal.

6. Récepteur radar à effet Doppler à impulsions suivant l'une des revendications 1 à 6, caractérisé par le fait que la valeur d'amplitude la plus faible déterminée par comparaison des valeurs d'amplitude voisines de la ou des valeurs d'amplitude perturbées est utilisé pour le rétablissement de la variation non perturbée du signal.

7. Récepteur radar à effet Doppler à impulsions suivant l'une des revendications 3 à 6, caractérisé par le fait que le circuit d'interpolation et de limitation ou de substitution (9) est constitué par un registre à décalage (SR) et par un dispositif limiteur (BS), dont les niveaux de limitation sont fournis par interpolation au moyen d'un circuit d'interpolation (IS) à partir des valeurs des signaux envoyés depuis l'entrée du registre à décalage (SR) et des valeurs de signaux envoyés depuis la sortie du dispositif limiteur (BS) par l'intermédiaire d'une mémoire (SP).

8. Récepteur radar à effet Doppler à impulsions suivant l'une des revendications précédentes, caractérisé par le fait que le circuit d'interpolation et de limitation ou de substitution est disposé dans la voie de traitement des signaux en aval d'un dispositif redresseur (8) ou d'un dispositif d'addition des valeurs.

9. Récepteur radar à effet Doppler à impulsions suivant l'une des revendications 1 à 7, caractérisé par le fait que le circuit d'interpolation et de limitation ou de substitution (9) est disposé dans la voie de traitement des signaux en aval d'un convertisseur analogique/numérique (6).

10. Récepteur radar à effet Doppler à impulsions suivant l'une des revendications 1 à 7, caractérisé par le fait que le circuit d'interpolation et de limitation ou de substitution est disposé en aval d'un filtre (7) de suppression des échos fixes (par exemple d'échos simples, suppresseur d'échos doubles).

11. Récepteur radar à effet Doppler à impulsions suivant l'une des revendications précédentes, caractérisé par le fait que le circuit d'interpolation et de limitation ou de substitution est disposé dans le canal I ou Q d'un système en quadrature.

FIG 1

FIG 2

FIG 3

# FIG 4

# FIG 5

# FIG 6

**FIG 7**

$A_{In}$  SR  $A_{I(n-N)}$  +BI / 1-BI  BS  SP  $A'_{I(n-N-1)}$

$B_{I(n-N)}$

IS

$A'_{I(n-N)}$

$B_{Q(n-N)}$

$A'_{Q(n-N)}$

$A_{Qn}$  SR  +BQ / 1-BQ  SP  $A'_{Q(n-N-1)}$

$A_{Q(n-N)}$  BS

**FIG 8**

$A_{n-N}$

Störimpuls

$A_{Q(n-N)}$

$B_{n-N}$

$A_n$

$B_{Q(n-N)}$

$A_{Qn}$

$A_{I(n-N)}$

$B_{I(n-N)}$

$A_{In}$

$A'_{Q(n-N-1)}$

$A'_{n-N-1}$

$A'_{I(n-N-1)}$

**FIG 9**

$E_{An}$  SR  BS  SP  $A'_{n-N-1}$

$B_{o(n-N)}$  $B_{u(n-N)}$

$A'_{n-N}$

IS